# EUROPÄISCHE PATENTSCHRIFT

(11) **EP 3 504 089 B1**
(45) Veröffentlichungstag und Bekanntmachung des Hinweises auf die Patenterteilung: **29.12.2021**
(21) Anmeldenummer: 17757546.1
(22) Anmeldetag: 25.08.2017
(51) Int. Cl.: B60R 21/231, B60R 21/2338

(54) **AIRBAGVORRICHTUNG FÜR EIN KRAFTFAHRZEUG, SOWIE AIRBAGKISSEN FÜR EINE AIRBAGVORRICHTUNG**
AIRBAGVORRICHTUNG FÜR EIN KRAFTFAHRZEUG, SOWIE AIRBAGKISSEN FÜR EINE AIRBAG-VORRICHTUNG
SYSTÈME DE COUSSIN GONFLABLE DE SÉCURITÉ POUR VÉHICULE À MOTEUR ET COUSSIN GONFLABLE DE SÉCURITÉ POUR SYSTÈME DE COUSSIN GONFLABLE DE SÉCURITÉ

(30) Priorität: 26.08.2016 DE 102016010249
(43) Veröffentlichungstag der Anmeldung: 03.07.2019
(73) Patentinhaber: Autoliv Development AB, 447 83 Vårgårda (SE)
(72) Erfinder: GARNIER, Sebastien, 76520 Montmain (FR); ALENSPACH, Guillaume, 76116 Martainville Epreville (FR); DELAUNAY, Fabrice, 76780 HODENG HODENGER (FR); HOUESSOU, Jules, 447 35 Vårgårda (SE)
(74) Vertreter: Schön, Thilo
(86) Internationale Anmeldenummer: PCT/EP2017/071419
(87) Internationale Veröffentlichungsnummer: WO 2018/037110

(56) Entgegenhaltungen:
- EP-A1- 2 960 117
- EP-A1- 2 979 934
- EP-B1- 2 960 117
- EP-B1- 2 979 934
- WO-A1-2017/179839
- GB-A- 2 322 338
- US-A1- 2011 049 852
- US-A1- 2012 091 697

## Beschreibung

Die vorliegende Erfindung betrifft eine Airbagvorrichtung für ein Kraftfahrzeug, die an einem Sitzrahmen angeordnet und befestigt werden kann, und die ausgebildet ist, den Kopf und den Brustkorb eines Insassen im Falle eines Seitenaufpralls oder Fahrzeugüberschlags zu schützen. Weiterhin betrifft die vorliegende Erfindung ein Airbagkissen für die erwähnte Airbagvorrichtung.

Airbagvorrichtungen für Kraftfahrzeuge werden mittlerweile vielseitig in modernen Kraftfahrzeugen als zusätzliche Schutzsysteme verwendet. Beispielsweise werden Airbagvorrichtungen als Schutzsystem für den Fahrer eines Kraftfahrzeuges verwendet, und sind hierzu vorzugsweise im Lenkrad direkt vor dem Fahrer des Kraftfahrzeuges angeordnet. Weiterhin werden Airbagvorrichtungen auch als Schutzsystem für den Beifahrer verwendet, und sind hier vorzugsweise im Armaturenbrett vor dem Beifahrersitz im Bereich des Handschuhfaches angeordnet. Auch ist es bekannt, Airbagvorrichtungen im unteren Bereich des Armaturenbrettes vor dem Fahrersitz sowie dem Beifahrersitz anzubringen, die die Knie sowie die unteren Beine des Fahrers und Beifahrers im Falle eines Unfalles schützen.

Als weitere ergänzende Schutzsysteme werden Airbagvorrichtungen auch zum Seitenschutz von Insassen eines Kraftfahrzeuges verwendet, um den Kopf und den Brustkorb eines Insassen im Falle eines Seitenaufpralls oder Fahrzeugüberschlags zu schützen. Hierzu werden Airbagvorrichtungen beispielsweise im nach außen weisenden Seitenbereich der Lehne des Fahrersitzes bzw. des Beifahrersitzes angebracht, oder sie werden im Dachbereich des Innenraums über den Seitenfenstem angeordnet, um im Falle eines Unfalles mit einem als Gardine aufgeblasenen Airbagkissen die Insassen des Kraftfahrzeuges zu schützen.

Diese bekannten Airbagvorrichtungen gibt es in verschiedenen Größen und Ausführungsformen, die an den jeweiligen geplanten Anbringungsort bzw. Verwendungszweck im Innenraum des Fahrzeuges angepasst sind.

So ist beispielsweise aus der DE 10 2009 044 734 eine Airbagvorrichtung zum Seitenschutz von Insassen eines Kraftfahrzeugs bekannt, die an einem vorbestimmten Abschnitt des Sitzrahmens angebracht ist. Diese bekannte Airbagvorrichtung weist ein Airbagmodul, sowie ein in dem Airbagmodul zusammengefaltet angeordnetes Airbagkissen auf. Das Airbagmodul ist mittels Bolzen an dem Sitzrahmen befestigt und weist weiterhin einen Bügel auf, der mit einem ersten Ende an einen vorbestimmten Abschnitt des Airbagkissen gekoppelt ist, und mit einem zweiten Ende an den Bolzen. Mit dem Bügel soll es ermöglicht werden, dass das Airbagkissen mit einer vorbestimmten Länge in eine vorbestimmte Position entfaltet wird, wenn das Airbagkissen aufgeblasen wird.

In den letzten Jahren haben sich jedoch die Anforderungen an die Sicherheitssysteme in Kraftfahrzeugen wesentlich erhöht, nicht zuletzt durch die schärferen Sicherheitsvorschriften der für die Kraftfahrzeugsicherheit zuständigen Behörden. Um eine höchste Bewertung für ein Kraftfahrzeug durch die für die Kraftfahrzeugsicherheit zuständigen Behörden zu erzielen, ist es nunmehr erforderlich, Kraftfahrzeuge mit einem so genannten "FCA" (Front Center Airbag) auszustatten. Dieser FCA ist in der Mitte des Fahrzeuges zwischen dem Fahrersitz und einem Sitz eines Passagiers angeordnet, vorzugsweise im zum benachbarten Sitz weisenden Seitenbereich der Lehne des Fahrersitzes oder Beifahrersitzes, und schützt bei einem Seitenaufprall die Flanke oder den Kopf einer Person in diesen Sitzen, wenn das Airbagkissen entfaltet ist. Ein solcher FCA-Airbag ist beispielsweise in der US 2012/091697 A1 gezeigt.

Aufgrund der Anordnung des FCA in der Mitte des Fahrzeuges, zwischen dem Fahrersitz und einem Sitz eines Passagiers, weist der FCA jedoch nur eine geringe seitliche Steifheit auf, da er sich im aufgeblasenen Zustand nicht an der Karosse abstützen kann. Der bekannte FCA weist somit nur ein begrenztes seitliches Rückhaltevermögen auf.

Weiterhin ist aufgrund der gegebenen Geometrie der Sitze, und der sich daraus ergebenden Begrenzung des Einbauraums, im oberen Seitenbereich des Sitzes sowie in der Kopfstütze kein ausreichender Einbauraum für ein Airbagmodul für einen FCA vorhanden. Airbagmodule für einen FCA können daher nur in dem unteren Seitenbereich der Rückenlehne störungsfrei untergebracht werden, da nur hier ein ausreichender Einbauraum vorhanden ist.

Die Anordnung des Airbagmoduls im unteren Seitenbereich der Rückenlehne führt jedoch eine Reihe von Nachteilen mit sich.

Herkömmliche Airbagmodule sind üblicherweise symmetrisch aufgebaut, was bedeutet, dass der Gasgenerator in der Mitte angeordnet ist, und das Airbagkissen symmetrisch zur Mitte hin gefaltet ist. Bei der Auslösung des Airbagmoduls wird somit auch das Airbagkissen symmetrisch aufgeblasen, das heißt das Airbagkissen entfaltet sich zu gleichen Teilen oberhalb und unterhalb des Gasgenerators, was ein stabiles Positionierverhalten des Airbagkissen mit sich führt. Wird nun ein herkömmliches Airbagmodul mit einem herkömmlichen Airbagkissen für einen FCA verwendet, so muss ein extra großes Airbagkissen verwendet werden, dass im entfalteten bzw. aufgeblasenen Zustand von der Einbauposition des Airbagmoduls im unteren Seitenbereich der Lehne bis über die Kopfstütze des Sitzes nach oben reichen muss, um den Kopf einer Person zu schützen.

Zum einen benötigt dieses extra große Airbagkissen auch im gefalteten Zustand ein großes Volumen. Das Volumen zum Einbau von Modulen im unteren Seitenbereich der Rückenlehne ist jedoch begrenzt, so dass sich beim Einbau eines extra großen Airbagkissen aufgrund des erhöhten Volumens des extra großen Airbagkissens Funktionsprobleme ergeben.

Zum anderen wird ein ebenso großer Teil des extra grossen Airbagkissens nach unten hin entfaltet und aufgeblasen, da das Airbagkissen hier symmetrisch zum Gasgenerator hin gefaltet ist. Nach unten hin ist jedoch der Raum zwischen den beiden Sitzen durch den Getriebetunnel bzw. die Mittelkonsole begrenzt, so dass sich der untere Teil des extra großen Airbagkissen nicht richtig entfalten kann. Dadurch wird jedoch auch die Entfaltung des oberen Teils des extra großen Airbagkissens, sowie dessen Positionierung bezüglich des Kopfes, beeinflusst, so dass die sichere Funktionsweise hier nicht gewährleistet werden kann.

Zur Vermeidung des letztgenannten Nachteils ist es bekannt, Airbagkissen so zu falten und am Gasgenerator anzubringen, dass sie sich im Wesentlichen vom Gasgenerator nach oben hin unsymmetrisch entfalten, wenn der Gasgenerator ausgelöst wird und das Airbagkissen aufbläst.

Damit kann zwar zum einen ein kleineres Airbagkissen verwendet werden, welches ein kleineres Volumen im gefalteten Zustand benötigt, und die Airbagvorrichtung kann im unteren Seitenbereich der Rückenlehne des Sitzes angebracht werden, wo es ein ausreichendes Volumen zum unterbringen der Airbagvorrichtung gibt. Weiterhin wird eine Beeinflussung des aufgeblasenen Airbagkissens durch die Mittelkonsole bzw. den Getriebetunnel vermieden.

Zum anderen hat das Airbagkissen hier jedoch ein instabiles Positionierverhalten, da die Entfernung vom Befestigungspunkt des Airbagkissens am Sitzrahmen bis zum Kopfbereich des Airbagkissens gross ist und das Airbagkissen unsymmetrisch aufgeblasen wird, so dass eine Verdrehung bzw. Verschiebung des Kopfbereichs des Airbagkissens bezüglich der geplanten Anwendungsposition möglich ist. Insbesondere ist es möglich, da das Airbagkissen in der Längsrichtung des Fahrzeuges nach oben und vorne hin entfaltet wird (d.h. unsymmetrisch bezüglich des Gasgenerators), dass das Airbagkissen eine nach rückwärts gerichtete Verdrehung erfährt, die den Kopfbereich des Airbagkissens aus der geplanten Anwendungsposition führt. Damit besteht jedoch die Gefahr, dass die Passagiere auf den Vordersitzen im Falle eines Seitenaufpralls oder Fahrzeugüberschlags mit den Köpfen zusammenstossen können. Diese nach rückwärts gerichtete Verdrehung des Airbagkissens ist im wesentlichen auf die explosionsartige schnelle Aufblasung des Airbagkissens, und die nachfolgende Entleerung nach der vollständigen Aufblasung, zurückzuführen.

Zur Verbesserung des Positionierverhaltens ist es bekannt, beispielsweise aus der GB 2 357 999 sowie der US 2012/0049498, Zuglemente in Form von Riemen auf der zum Insassen weisenden Seite des Airbagkissens mit einem Ende am Airbagkissen anzubringen, und mit dem anderen Ende am Sitzrahmen zu befestigen. Damit lässt sich zwar das Positionierverhalten sowie die Steifheit des Airbagkissens verbessern, da die Zugelemente die vom Insassen auf diese Seite des Airbagkissens aufgebrachten Kräfte aufnehmen, und damit das Airbagkissen in der vorgesehenen Position halten. Allerdings wird hierdurch auch das Rückhaltevermögen des Airbagkissens beeinträchtigt, da der Insasse des Kraftfahrzeugs durch die auf der zum Insassen weisenden Seite des Airbagkissens angeordneten Zugelemente leichter vom aufgeblasenen Airbagkissen abrutschen kann.

Auch die gattungsbildende EP 2 979 934 A1 zeigt die Positionierung mittels eines als Zugelement dienenden Riemens. Hierbei ist dieses Zugelement mit einem ersten Ende in einem Mittenbereich des Airbagkissens befestigt.

Vor diesem Hintergrund ist es daher Aufgabe der vorliegenden Erfindung, eine einfache, kostengünstige und funktionssichere Airbagvorrichtung für ein Kraftfahrzeug zur Verfügung zu stellen, die den Kopf und den Brustkorb eines Insassen im Falle eines Seitenaufpralls oder Fahrzeugüberschlags zuverlässig schützt und ein abrutschen des Insassen vom aufgeblasenen Airbagkissen zuverlässig verhindert. Weiterhin ist es Aufgabe der vorliegende Erfindung, ein Airbagkissen für ein Kraftfahrzeug zur Verfügung zu stellen, das den Kopf und den Brustkorb eines Insassen im Falle eines Seitenaufpralls oder Fahrzeugüberschlags zuverlässig schützt und ein abrutschen des Insassen vom aufgeblasenen Airbagkissen zuverlässig verhindert.

Gelöst wird diese Aufgabe durch eine Airbagvorrichtung gemäß Anspruch 1. Weitere vorteilhafte Ausgestaltungen der Erfindung sind Gegenstand der Unteransprüche.

Die erfindungsgemäße Airbagvorrichtung für ein Kraftfahrzeug kann an einem Sitzrahmen angeordnet und befestigt werden und ist ausgebildet, den Kopf und den Brustkorb eines Insassen im Falle eines Seitenaufpralls oder Fahrzeugüberschlags zu schützen. Sie weist einen Gasgenerator sowie ein Airbagkissen auf, die miteinander verbunden sind, und kann an einer ersten, zum benachbarten Sitz weisenden Seite des Sitzrahmens angeordnet und befestigt werden. Die Airbagvorrichtung weist ein erstes Zugelement auf, dass mit einem ersten Ende an einem Mittenbereich des Airbagkissens befestigt ist.

Hierdurch wird eine Airbagvorrichtung zur Verfügung gestellt, die bei einer Auslösung das Airbagkissen zuverlässig in der vorgesehenen Position hält, und bei der vermieden wird, dass der Insasse vom aufgeblasenen Airbagkissen abrutscht. Damit wird zum einen das Zusammenstossen der Köpfe von auf nebeneinander angeordneten Sitzen sitzenden Insassen zuverlässig vermieden, wenn zwei Insassen im Kraftfahrzeug befördert werden. Wenn nur ein Insasse im Kraftfahrzeug befördert wird, so wird dieser durch die erfindungsgemäße und vorteilhafte Ausgestaltung der Airbagvorrichtung zuverlässig auf seinem Sitz zurückgehalten. Dieses bietet dem Insassen eine erhöhte Sicherheit insbesondere dann, wenn das Fahrzeug auf der dem Sitz gegenüberliegenden Seite in einem Seitenaufprall getroffen wird, da auch in diesem Fall der Insasse zuverlässig auf seinem Sitz zurückgehalten wird.

Erfindungsgemäß weist die Airbagvorrichtung ein zweites Zugelement und ein drittes Zugelement auf, die jeweils mit einem ersten Ende am vorderen Bereich des Airbagkissens befestigt sind. Damit kann das Airbagkissen zuverlässig und funktionssicher angeordnet werden, insbesondere wenn gemäß einer weiteren vorteilhaften Weiterbildung das zweite Zugelement und das dritte Zugelement jeweils mit einem zweiten Ende an der ersten Seite des Sitzrahmens angeordnet und befestigt werden kann. Hierdurch wird erreicht, dass das aufgeblasene Airbagkissen funktionssicher und stabil am Sitzrahmen befestigt ist und in der vorgesehenen Position gehalten wird, so dass die Funktionssicherheit der Airbagvorrichtung gewährleistet ist.

Um eine Beeinflussung des Insassen durch das Zugelement zu vermeiden, und damit jeden Ansatz eines Abrutschens des Insassen vom aufgeblasenen Airbagkissen zu vermeiden, ist das erste Zugelement vorteilhafterweise und erfindungsgemäß mit dem ersten Ende in einem hinteren Teil des Mittenbereichs des Airbagkissens befestigt. Als besonders vorteilhaft ist hier anzusehen, dass durch diese Ausbildung der größte Teil des aufgeblasenen Airbagkissens vor dem ersten Zugelement angeordnet ist, so das hier eine ausreichende Fläche zur sicheren Aufnahme bzw. zum genauen und funktionssicheren Abfangen des Insassen vorhanden ist. Weiterhin wird hierdurch erreicht, dass das erste Zugelement zwischen Insasse und Rückenlehne des Sitzes angeordnet ist, und damit nicht zwischen Insasse und aufgeblasenem Airbagkissen gerät, wenn die Airbagvorrichtung ausgelöst wird. Das erste Zugelement beeinflusst daher durch diese erfindungsgemäße und vorteilhafte Anordnung nicht die Bewegung des Insassen, die durch das Ereignis erzeugt wird, das die Airbagvorrichtung auslöst. Somit wird hierdurch zuverlässig verhindert, dass der Insasse am ersten Zugelement entlang vom aufgeblasenen Airbagkissen abrutschen oder abgleiten könnte.

Die Funktionssicherheit der Airbagvorrichtung sowie die Steifigkeit des Airbagkissens wird weiter verbessert, wenn gemäß einer bevorzugten Ausführungsform das erste Zugelement vorteilhafterweise und erfindungsgemäß mit dem ersten Ende im Bereich von Haltemitteln in einem hinteren Teil des Mittenbereichs des Airbagkissens befestigt ist. Diese Haltemittel können beispielsweise Riemen sein, die im Inneren des Airbagkissens angeordnet sind und die Seiten des Airbagkissens miteinander verbinden, um beim aufblasen des Airbagkissens die Seiten des Airbagkissens mit einem vorgegebenen Abstand voneinander anzuordnen, und so die Form des aufgeblasenen Airbagkissens sowie dessen Steifigkeit zu bestimmen.

Durch die Befestigung des ersten Endes des ersten Zugelements im Bereich dieser Haltemittel wird die Steifigkeit sowie die Belastbarkeit des Airbagkissens deutlich verbessert, und damit auch die Funktionssicherheit der erfindungsgemäßen Airbagvorrichtung.

Die Funktionssicherheit der Airbagvorrichtung sowie die Steifigkeit des Airbagkissens wird noch weiter verbessert, wenn gemäß einer weiteren bevorzugten Ausführungsform das erste Zugelement vorteilhafterweise und erfindungsgemäß mit einem zweiten Ende an einer zweiten, der ersten Seite des Sitzrahmens gegenüberliegenden und zur Fahrzeugaussenseite weisenden Seite des Sitzrahmens angeordnet und befestigt werden kann. Damit kann das erste Zugelement das aufgeblasene Airbagkissen in der vorgesehenen Position halten und die starken Kräfte aufnehmen, die entstehen, wenn der Insasse durch die beim Seitenaufprall entstehenden Kräfte in das aufgeblasene Airbagkissen gedrückt wird. Wie bereits erwähnt, ist dies ist besonders vorteilhaft, wenn das Fahrzeug auf der dem Sitz gegenüberliegenden Seite in einem Seitenaufprall getroffen wird, und der Insasse durch die beim Seitenaufprall entstehenden Kräfte in Richtung auf das aufgeblasene Airbagkissen gedrückt wird.

Weiterhin wird hierdurch auch eine Stabilisierung des Airbagkissens in Seitenrichtung erzielt, so dass ein seitliches Wegklappen des aufgeblasenen Airbagkissens verhindert wird. Damit behält das aufgeblasene Airbagkissen seine Position im vorgesehenen Anwendungsbereich seitlich neben dem Sitz auch dann, wenn der Insasse in das Airbagkissen gedrückt wird, so dass die Zuverlässigkeit und Funktionsfähigkeit weiter verbessert wird. Die seitliche Steifigkeit des aufgeblasenen Airbagkissens wird somit deutlich erhöht, obwohl sich das aufgeblasene Airbagkissen nicht an der Karosse abstützt.

Um die Funktionssicherheit der Airbagvorrichtung weiter zu verbessern, sowie ein abrutschen oder abgleiten des Insassen vom aufgelassenen Airbagkissen zuverlässig zu verhindern, ist es gemäß einer bevorzugten Weiterbildung vorgesehen, dass der Mittenbereich des Airbagkissens einen vertieften Mittenbereich bildet, wenn die Airbagvorrichtung ausgelöst und das Airbagkissen aufgeblasen wird. Dieser erfindungsgemäße und vorteilhafte vertiefte Mittenbereich kann die Schulter eines Insassen aufnehmen, wenn dieser durch das die Auslösung der Airbagvorrichtung bewirkende Ereignis in das aufgeblasene Airbagkissen gedrückt wird. Damit wird jedoch der Insasse zuverlässig durch das aufgeblasene Airbagkissen vor diesem gehalten, und es wird verhindert, dass der Insasse vom aufgeblasenen Airbagkissen abgleitet oder abrutscht. Der vertiefte Mittenbereich bzw. Schulterbereich kann auf verschiedene Weise gebildet werden. Beispielsweise kann es ein Bereich des Airbagkissens sein, der nicht aufgeblasen wird. Oder es kann ein Bereich des Airbagkissen sein, der weniger aufgeblasen wird als die ihn umgebenden Bereiche des Airbagkissen, um die gewünschte Dicke des Mittenbereichs bzw. Schulterbereichs zu bilden. Dem Fachmann sind die hierfür notwendigen konstruktiven Gestaltungen des Airbagkissens bekannt, die hiermit in die Offenbarung und den Umfang der Erfindung mit einbezogen werden.

Gemäß einerweiteren bevorzugten Ausführungsform ist es erfindungsgemäß und vorteilhaft vorgesehen, dass ein vorderer Bereich des Airbagkissens dicker als der Mittenbereich des Airbagkissens ist, wenn die Airbagvorrichtung ausgelöst und das Air- bagkissen aufgeblasen wird. Damit wird die Funktionssicherheit der Airbagvorrichtung weiter verbessert, sowie ein abrutschen oder abgleiten des Insassen vom aufgelassenen Airbagkissen zuverlässig verhindert. Der dicke vordere Bereich des Airbagkissens hält den Insassen zuverlässig mit der Schulter im vertieften Mittenbereich, bzw. im Schulterbereich, so dass der Insasse nicht vom aufgeblasenen Airbagkissen abrutscht oder abgleitet.

Um eine Beeinflussung des Insassen durch das zweite Zugelement und das dritte Zugelement zu vermeiden, und damit ein abrutschen bzw. abgleiten des Insassen vom aufgeblasenen Airbagkissen zu verhindern, ist es gemäß einer weiteren vorteilhaften Weiterbildung vorgesehen, dass das zweite Zugelement oberhalb des ersten Zugelements, und das dritte Zugelement unterhalb des ersten Zugelements angeordnet ist. Durch diese erfindungsgemäße und vorteilhafte Weiterbildung wird das zweite Zugelement oberhalb des Mittenbereichs angeordnet, und dass dritte Zugelement unterhalb des Mittenbereichs, so dass der Mittenbereich nicht verdeckt wird. Damit kann der Mittenbereich bzw. Schulterbereich die Schulter des Insassen zuverlässig aufnehmen, so dass dieser nicht vom aufgeblasenen Airbagkissen abrutscht oder abgleitet. Damit ist die Funktionssicherheit der erfindungsgemäßen Airbagvorrichtung gewährleistet.

Der Begriff"oberhalb" bezieht sich hier auf die Einbaulage des Airbagkissens in der Airbagvorrichtung. In der Einbaulage hat das Airbagkissen eine nach unten, zum Fahrzeugboden gerichteten Seite, sowie eine nach oben, zum Fahrzeugdach gerichtete Seite. Durch die Begriffe"oberhalb" und"unterhalb" wird somit die Anordnung und Relation des zweiten und dritten Zugelements zum ersten Zugelement für den Fachmann deutlich definiert. Ebenso sind die Zuordnungen wie beispielsweise"mittlerer Bereich", "vorderer Bereich", "unterer Bereich" etc. hierdurch für den Fachmann ausreichend definiert.

Funktionsmäßig bewirkt das zweite Zugelement die Steifigkeit des oberen Bereichs des aufgeblasenen Airbagkissens, so dass der Kopf eines Insassen aufgefangen bzw. gehalten wird, wenn die Airbagvorrichtung aufgrund eines äußeren Ereignisses ausgelöst wird, und sich der Insasse aufgrund dieses äußeren Ereignisses in Richtung auf das aufgeblasene Airbagkissen bewegt. Das erste Zugelement und das dritte Zugelement bewirken die Steifigkeit des mittleren und des unteren Bereichs des aufgeblasenen Airbagkissens, so dass der Körper eines Insassen aufgefangen bzw. gehalten wird, wenn die Airbagvorrichtung aufgrund eines äußeren Ereignisses ausgelöst wird, und sich der Insasse aufgrund dieses äußeren Ereignisses in Richtung auf das aufgeblasene Airbagkissen bewegt. Die Form des aufgeblasenen Airbagkissens mit dem vertieften Mittenbereich bzw. Schulterbereich, sowie dem dickeren vorderen Bereich, bietet einen hervorragenden Schutz für den Kopf, den Brustkorb und den Unterleib des Insassen, während sie gleichzeitig ein abrutschen oder abgleiten des Insassen vom aufgeblasenen Airbag verhindert.

Die Befestigung der erfindungsgemäßen Airbagvorrichtung an einer ersten Seite des Sitzrahmens kann beispielsweise in bekannter Weise mit den am Gasgenerator angeordneten Befestigungsbolzen erfolgen, während die ersten Enden des ersten, des zweiten und des dritten Zugelementes beispielsweise in bekannter Weise am Airbagkissen angenäht werden können.

Das zweite Ende des zweiten, oberen Zugelementes kann beispielsweise in bekannter Weise ebenfalls mittels eines Befestigungsbolzens des Gasgenerators an einer ersten Seite des Sitzrahmens befestigt werden, während das zweite Ende des dritten, unteren Zugelementes beispielsweise mittels Schrauben oder anderer geeigneter Befestigungsmittel direkt an einer ersten Seite des Sitzrahmens befestigt werden kann. Alternativ kann das zweite Ende des dritten, unteren Zugelementes ebenfalls mittels eines Befestigungsbolzens des Gasgenerators an einer ersten Seite des Sitzrahmens befestigt werden. Das zweite Ende des ersten Zugelementes kann beispielsweise mittels Schrauben oder anderer geeigneter Befestigungsmittel direkt an einer zweiten gegenüberliegenden Seite des Sitzrahmens befestigt werden. Dem Fachmann sind die geeigneten Befestigungsmöglichkeiten bekannt, die hiermit in die Offenbarung und den Umfang der Erfindung mit einbezogen werden.

Es wird somit erfindungsgemäß eine Airbagvorrichtung zur Verfügung gestellt, bei der Zugmittel das aufgeblasene Airbagkissen in der Anwendungsposition positionieren und die Kinematik nach vorne orientieren, so dass eine Geschwindigkeits- und Energieaufnahme des Insassen, mit einer daraus resultierenden Verschiebung bzw. Bewegung des Insassen, verringert oder vermieden wird. Gleichzeitig wird durch den vertieften Mittenbereich bzw. Schulterbereich verhindert, dass der Insasse vom aufgeblasenen Airbagkissen abrutscht oder abgleitet.

Das erfindungsgemäße Airbagkissen für ein Kraftfahrzeug kann an einem Sitzrahmen angeordnet und befestigt werden und ist ausgebildet, den Kopf und den Brustkorb eines Insassen im Falle eines Seitenaufpralls oder Fahrzeugüberschlags zu schützen. Das Airbagkissen kann mit einem Gasgenerator verbunden werden, und kann an einer ersten, zum benachbarten Sitz weisenden Seite des Sitzrahmens angeordnet und befestigt werden. Erfindungsgemäß und vorteilhafterweise weist das Airbagkissen ein erstes Zugelement auf, dass mit einem ersten Ende an einem Mittenbereich des Airbagkissens befestigt ist.

Durch diese erfindungsgemäße und vorteilhafte Ausgestaltung wird ein Airbagkissen zur Verfügung gestellt, das bei einer Auslösung zuverlässig in der vorgesehenen Position gehalten wird, und bei dem vermieden wird, dass der Insasse vom aufgeblasenen Airbagkissen abrutscht. Damit wird zum einen das Zusammenstossen der Köpfe von auf nebeneinander angeordneten Sitzen sitzenden Insassen zuverlässig vermieden, wenn zwei Insassen im Kraftfahrzeug befördert werden. Wenn nur ein Insasse im Kraftfahrzeug befördert wird, so wird dieser durch die erfindungsgemäße und vorteilhafte Ausgestaltung des Airbagkissens zuverlässig auf seinem Sitz zurückgehalten. Dieses bietet dem Insassen eine erhöhte Sicherheit insbesondere dann, wenn das Fahrzeug auf der dem Sitz gegenüberliegenden Seite in einem Seitenaufprall getroffen wird, da auch in diesem Fall der Insasse zuverlässig auf seinem Sitz zurückgehalten wird.

Um eine Beeinflussung des Insassen durch das Zugelement zu vermeiden, und damit jeden Ansatz eines Abrutschens des Insassen vom aufgeblasenen Airbagkissen zu vermeiden, ist das erste Zugelement vorteilhafterweise und erfindungsgemäß mit dem ersten Ende in einem hinteren Teil des Mittenbereichs des Airbagkissens befestigt. Als besonders vorteilhaft ist hier anzusehen, dass durch diese Ausbildung der größte Teil des aufgeblasenen Airbagkissens vor dem ersten Zugelement angeordnet ist, so das hier eine ausreichende Fläche zur sicheren Aufnahme bzw. zum genauen und funktionssicheren Abfangen des Insassen vorhanden ist. Weiterhin wird hierdurch erreicht, dass das erste Zugelement zwischen Insasse und Rückenlehne des Sitzes angeordnet ist, und damit nicht zwischen Insasse und aufgeblasenem Airbagkissen gerät. Das erste Zugelement beeinflusst daher durch diese erfindungsgemäße und vorteilhafte Anordnung nicht die Bewegung des Insassen, die durch das Ereignis erzeugt wird, das die Aufblasung des Airbagkissens auslöst. Somit wird hierdurch zuverlässig verhindert, dass der Insasse am ersten Zugelement entlang vom aufgeblasenen Airbagkissen abrutschen oder abgleiten könnte.

Die Funktionssicherheit sowie die Steifigkeit des Airbagkissens wird weiter verbessert, wenn gemäß einer bevorzugten Ausführungsform das erste Zugelement vorteilhafterweise und erfindungsgemäß mit dem ersten Ende im Bereich von Haltemitteln in einem hinteren Teil des Mittenbereichs des Airbagkissens befestigt ist. Diese Haltemittel können beispielsweise Riemen sein, die im Inneren des Airbagkissens angeordnet sind und die Seiten des Airbagkissens miteinander verbinden, um beim aufblasen des Airbagkissens die Seiten des Airbagkissens mit einem vorgegebenen Abstand voneinander anzuordnen, und so die Form des aufgeblasenen Airbagkissens sowie dessen Steifigkeit zu bestimmen.

Durch die Befestigung des ersten Endes des ersten Zugelements im Bereich dieser Haltemittel wird die Steifigkeit sowie die Belastbarkeit des Airbagkissens deutlich verbessert, und damit auch die Funktionssicherheit.

Die Funktionssicherheit sowie die Steifigkeit des Airbagkissens wird noch weiter verbessert, wenn gemäß einer weiteren bevorzugten Ausführungsform das erste Zugelement vorteilhafterweise und erfindungsgemäß mit einem zweiten Ende an einer zweiten, der ersten Seite des Sitzrahmens gegenüberliegenden und zur Fahrzeug- aussenseite weisenden Seite des Sitzrahmens angeordnet und befestigt werden kann. Damit kann das erste Zugelement das aufgeblasene Airbagkissen in der vorgesehenen Position halten und die starken Kräfte aufnehmen, die entstehen, wenn der Insasse durch die beim Seitenaufprall entstehenden Kräfte in das aufgeblasene Airbagkissen gedrückt wird. Wie bereits erwähnt, ist dies besonders vorteilhaft, wenn das Fahrzeug auf der dem Sitz gegenüberliegenden Seite in einem Seitenaufprall getroffen wird, und der Insasse durch die beim Seitenaufprall entstehenden Kräfte in Richtung auf das aufgeblasene Airbagkissen gedrückt wird.

Weiterhin wird hierdurch auch eine Stabilisierung des Airbagkissens in Seitenrichtung erzielt, so dass eine seitliches wegklappen des aufgeblasenen Airbagkissens verhindert wird. Damit behält das aufgeblasene Airbagkissen seine Position im vorgesehenen Anwendungsbereich seitlich neben dem Sitz, so dass die Zuverlässigkeit und Funktionsfähigkeit weiter verbessert wird.

Um die Funktionssicherheit des Airbagkissens weiter zu verbessern, sowie ein abrutschen oder abgleiten des Insassen vom aufgelassenen Airbagkissen zuverlässig zu verhindern, ist es gemäß einer bevorzugten Weiterbildung vorgesehen, dass der Mittenbereich des Airbagkissens einen vertieften Mittenbereich bildet, wenn das Airbagkissen aufgeblasen wird. Dieser erfindungsgemäße und vorteilhafte vertiefte Mittenbereich kann die Schulter eines Insassen aufnehmen, wenn dieser durch das die Aufblasung des Airbagkissens bewirkende Ereignis in das aufgeblasene Airbagkissen gedrückt wird. Damit wird jedoch der Insasse zuverlässig durch das aufgeblasene Airbagkissen vor diesem gehalten, und es wird verhindert, dass der Insasse vom aufgeblasenen Airbagkissen abgleitet oder abrutscht. Der vertiefte Mittenbereich bzw. Schulterbereich kann auf verschiedene Weise gebildet werden. Beispielsweise kann es ein Bereich des Airbagkissens sein, der nicht aufgeblasen wird. Oder es kann ein Bereich des Airbagkissen sein, der weniger aufgeblasen wird als die ihn umgebenden Bereiche des Airbagkissen, um die gewünschte Dicke des Mittenbereichs bzw. Schulterbereichs zu bilden. Dem Fachmann sind die hierfür notwendigen konstruktiven Gestaltungen des Airbagkissens bekannt, die hiermit in die Offenbarung und den Umfang der Erfindung mit einbezogen werden.

Gemäß eine rweiteren bevorzugten Ausführungsform ist es erfindungsgemäß und vorteilhaft vorgesehen, dass ein vorderer Bereich des Airbagkissens dicker als der Mittenbereich des Airbagkissens ist, wenn das Airbagkissen ausgeblasen wird. Damit wird die Funktionssicherheit des Airbagkissens weiter verbessert, sowie ein abrutschen oder abgleiten des Insassen vom aufgelassenen Airbagkissen zuverlässig verhindert. Der dicke vordere Bereich des Airbagkissens hält den Insassen zuverlässig mit der Schulter im vertieften Mittenbereich, bzw. im Schulterbereich, so dass der Insasse nicht vom aufgeblasenen Airbagkissen abrutscht oder abgleitet.

Eine vorteilhafte Weiterbildung der Erfindung sieht vor, dass das Airbagkissen ein zweites Zugelement und ein drittes Zugelement aufweist, die jeweils mit einem ersten Ende am vorderen Bereich des Airbagkissens befestigt sind. Damit kann das Airbagkissen zuverlässig und funktionssicher angeordnet werden, insbesondere wenn gemäß einer weiteren vorteilhaften Weiterbildung das zweite Zugelement und das dritte Zugelement jeweils mit einem zweiten Ende an der ersten Seite des Sitzrahmens angeordnet und befestigt werden kann. Hierdurch wird erreicht, dass das aufgeblasene Airbagkissen funktionssicher und stabil am Sitzrahmen befestigt ist und in der vorgesehenen Position gehalten wird, so dass die Funktionssicherheit des Airbagkissens gewährleistet ist.

Um eine Beeinflussung des Insassen durch das zweite Zugelement und das dritte Zugelement zu vermeiden, und damit ein abrutschen bzw. abgleiten des Insassen vom aufgeblasenen Airbagkissen zu verhindern, ist es gemäß einer weiteren vorteilhaften Weiterbildung vorgesehen, dass das zweite Zugelement oberhalb des ersten Zugelements, und das dritte Zugelement unterhalb des ersten Zugelements angeordnet ist. Durch diese erfindungsgemäße und vorteilhafte Weiterbildung wird das zweite Zugelement oberhalb des Mittenbereichs angeordnet, und dass dritte Zugelement unterhalb des Mittenbereichs, so dass der Mittenbereich nicht verdeckt wird. Damit kann der Mittenbereich bzw. Schulterbereich die Schulter des Insassen zuverlässig aufnehmen, so dass dieser nicht vom aufgeblasenen Airbagkissen abrutscht oder abgleitet. Damit ist die Funktionssicherheit des erfindungsgemäßen Airbagkissens gewährleistet.

Der Begriff"oberhalb" bezieht sich hier auf die Einbaulage des Airbagkissens. In der Einbaulage hat das Airbagkissen eine nach unten, zum Fahrzeugboden gerichteten Seite, sowie eine nach oben, zum Fahrzeugdach gerichtete Seite. Durch die Begriffe "oberhalb" und"unterhalb" wird somit die Anordnung und Relation des zweiten und dritten Zugelements zum ersten Zugelement für den Fachmann deutlich definiert. Ebenso sind die Zuordnungen wie beispielsweise"mittlerer Bereich","vorderer Bereich","unterer Bereich" etc. hierdurch für den Fachmann ausreichend definiert.

Funktionsmäßig bewirkt das zweite Zugelement die Steifigkeit des oberen Bereichs des aufgeblasenen Airbagkissens, so dass der Kopf eines Insassen aufgefangen bzw. gehalten wird, wenn das Airbagkissen aufgrund eines äußeren Ereignisses aufgeblasen wird, und sich der Insasse aufgrund dieses äußeren Ereignisses in Richtung auf das aufgeblasene Airbagkissen bewegt. Das erste Zugelement und das dritte Zugelement bewirken die Steifigkeit des mittleren und des unteren Bereichs des aufgeblasenen Airbagkissens, so dass der Körper eines Insassen aufgefangen bzw. gehalten wird, wenn das Airbagkissen aufgrund eines äußeren Ereignisses ausgelöst wird, und sich der Insasse aufgrund dieses äußeren Ereignisses in Richtung auf das aufgeblasene Airbagkissen bewegt. Die Form des aufgeblasenen Airbagkissens mit dem vertieften Mittenbereich bzw. Schulterbereich, sowie dem dickeren vorderen Bereich, bietet einen hervorragenden Schutz für den Kopf, den Brustkorb und den Unterleib des Insassen, während sie gleichzeitig ein abrutschen oder abgleiten des Insassen vom aufgeblasenen Airbag verhindert.

Die Befestigung des erfindungsgemäßen Airbagkissens an einer ersten Seite des Sitzrahmens kann beispielsweise in bekannter Weise mit den am Gasgenerator angeordneten Befestigungsbolzen erfolgen, während die ersten Enden des ersten, des zweiten und des dritten Zugelementes beispielsweise in bekannterweise am Airbagkissen angenäht werden können.

Das zweite Ende des zweiten, oberen Zugelementes kann beispielsweise in bekannterweise ebenfalls mittels eines Befestigungsbolzens des Gasgenerators an einer ersten Seite des Sitzrahmens befestigt werden, während das zweite Ende des dritten, unteren Zugelementes beispielsweise mittels Schrauben oder anderer geeigneter Befestigungsmittel direkt an einer ersten Seite des Sitzrahmens befestigt werden kann. Alternativ kann das zweite Ende des dritten, unteren Zugelementes ebenfalls mittels eines Befestigungsbolzens des Gasgenerators an einer ersten Seite des Sitzrahmens befestigt werden. Das zweite Ende des ersten Zugelementes kann beispielsweise mittels Schrauben oder anderer geeigneter Befestigungsmittel direkt an einer zweiten gegenüberliegenden Seite des Sitzrahmens befestigt werden. Dem Fachmann sind die geeigneten Befestigungsmöglichkeiten bekannt, die hiermit in die Offenbarung und den Umfang der Erfindung mit einbezogen werden.

Es wird somit erfindungsgemäß ein Airbagkissen zur Verfügung gestellt, bei der Zugmittel das aufgeblasene Airbagkissen in der Anwendungsposition positionieren und die Kinematik nach vorne orientieren, so dass eine Geschwindigkeits- und Energieaufnahme des Insassen, mit einer daraus resultierenden Verschiebung bzw. Bewegung des Insassen, verringert oder vermieden wird. Gleichzeitig wird durch den vertieften Mittenbereich bzw. Schulterbereich verhindert, dass der Insasse vom aufgeblasenen Airbagkissen abrutscht oder abgleitet.

Weitere Vorteile und Merkmale der Erfindung sind aus der nachfolgenden Beschreibung im Zusammenhang mit den Zeichnungen ersichtlich. In den Zeichnungen zeigt:
Fig. 1 : eine schematische Ansicht des Fahrersitzes (20) eines Kraftfahrzeuges mit einer an der Rückenlehne (22) angeordneten Airbagvorrichtung (10);
Fig. 2: eine schematische Ansicht des Fahrersitzes (20) mit einem Aufbruch, der den Sitzrahmen (24) mit der Airbagvorrichtung (10) sowie den am Sitzrahmen (24) angebrachten Zugelementen (40, 50, 60) darstellt;
Fig. 3: eine Schnittansicht einer ersten Ausführungsform der Airbagvorrichtung (10) zusammen mit dem Sitzrahmen (24) entlang der Linie A-A in Fig.2;
Fig. 4: eine Schnittansicht einer zweiten Ausführungsform der Airbagvorrichtung (10) zusammen mit dem Sitzrahmen (24) entlang der Linie A---A in Fig.2;
Fig. 5: die Schnittansicht der Fig. 4 mit einer schematischen Darstellung der Wirkungsweise der Airbagvorrichtung (10);

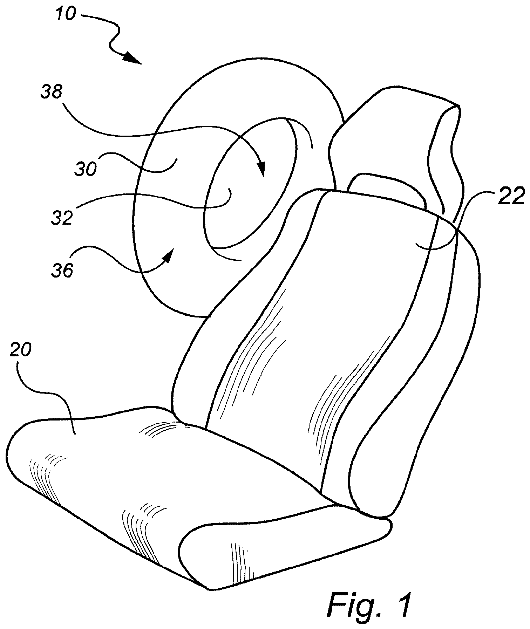

Die **Fig. 1** zeigt eine schematische Ansicht eines Fahrersitzes (20) eines Kraftfahrzeuges mit einer an einer Rückenlehne (22) angeordneten und ausgelösten Airbagvorrichtung (10). Die Airbagvorrichtung (10) weist ein Airbagkissen (30) auf sowie einen hier nicht dargestellten Gasgenerator, der das Airbagkissen (30) in der dargestellten Form aufgeblasen hat. Das hier dargestellte Airbagkissen (30) ist ein so genannter "FCA" (Front Center Airbag), der in der Mitte des Fahrzeuges zwischen dem Fahrersitz und einem nicht dargestellten Sitz eines Passagiers angeordnet ist, im zum nicht dargestellten benachbarten Sitz weisenden Seitenbereich der Lehne des Fahrersitzes, und der bei einem Seitenaufprall die Flanke und den Kopf einer Person in diesen Sitzen schützt.

Das Airbagkissen (30) weist einen vertieften Mittenbereich (32) bzw. Schulterbereich (38) zur Aufnahme der Schulter eines Insassen auf, sowie einen dickeren vorderen Bereich (36), der ein Herausrutschen der Schulter aus dem Mittenbereich (32) bzw. Schulterbereich (38) verhindert.

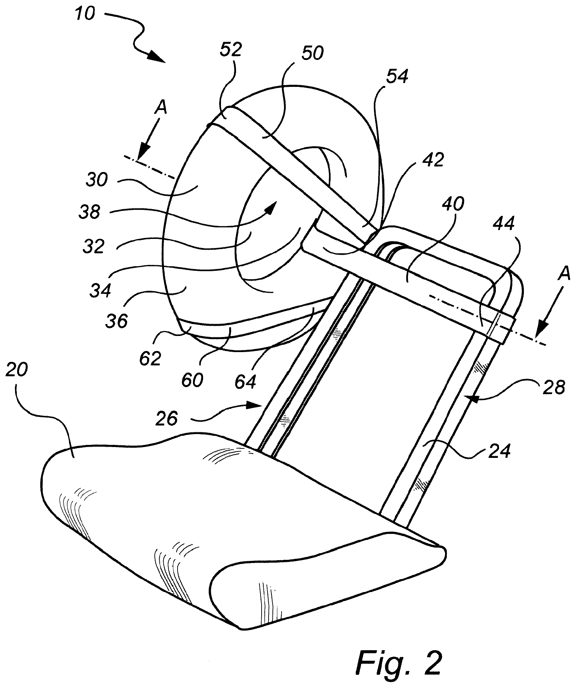

Die Funktionsweise der erfindungsgemäßen Airbagvorrichtung (10) wird nun nachfolgend unter Bezugnahme auf die **Fig. 2-5** näher erläutert.

Die **Fig. 2** zeigt eine schematische Ansicht des Fahrersitzes (20) der **Fig. 1** mit einem Aufbruch, der einen Sitzrahmen (24) der Rückenlehne (22) zeigt. An dem Sitzrahmen (24) ist die Airbagvorrichtung (10) an der ersten Seite (26) angebracht und befestigt, die zum benachbarten, nicht dargestellten Sitz weist. Die Befestigung der erfindungsgemäßen Airbagvorrichtung (10) an der ersten Seite (26) des Sitzrahmens (24) erfolgt bei diesem Ausführungsbeispiel in bekannter Weise mit den am (nicht dargestellten) Gasgenerator angeordneten Befestigungsbolzen.

Die Airbagvorrichtung (10) weist ein Airbagkissen (30) mit einem vertieften Mittenbereich (32) bzw. Schulterbereich (38) und einem dickeren vorderen Bereich (36) auf. Ein erstes Zugelement (40) ist mit einem ersten Ende (42) in einem hinteren Teil (34) des vertieften Mittenbereichs (32) bzw. Schulterbereichs (38) befestigt. Mit einem zweiten Ende (44) ist das erste Zugelement (40) an einer zweiten, gegenüberliegenden Seite (28) des Sitzrahmens (24) befestigt, die zur Fahrzeugaussenseite weist. Die Befestigung des zweiten Endes (44) des ersten Zugelements (40) an der zweiten Seite (28) des Sitzrahmens (24) erfolgt bei diesem Ausführungsbeispiel mit nicht dargestellten Schrauben.

Durch diese erfindungsgemässe und vorteilhafte Ausbildung kann das erste Zugelement (40) das aufgeblasene Airbagkissen (30) in der vorgesehenen Position halten und die starken Kräfte aufnehmen, die entstehen, wenn der Insasse durch die beim Seitenaufprall entstehenden Kräfte in das aufgeblasene Airbagkissen (30) gedrückt wird. Wie bereits erwähnt, ist dies besonders vorteilhaft, wenn das Fahrzeug auf der dem Sitz (20) gegenüberliegenden Seite in einem Seitenaufprall getroffen wird, und der Insasse durch die beim Seitenaufprall entstehenden Kräfte in Richtung auf das aufgeblasene Airbagkissen (30) gedrückt wird.

Weiterhin ist ein zweites Zugelement (50) mit einem ersten Ende (52) an einem vorderen Bereich (36) des Airbagkissens (30) befestigt, und mit einem zweiten Ende (54) an der ersten Seite (26) des Sitzrahmens (24). Die Befestigung des zweiten Endes (54) des zweiten Zugelements (50) an der ersten Seite (26) des Sitzrahmens (24) erfolgt bei diesem Ausführungsbeispiel mittels eines Befestigungsbolzens des nicht dargestellten Gasgenerators.

Schliesslich ist ein drittes Zugelement (60) mit einem ersten Ende (62) an einem vorderen Bereich (36) des Airbagkissens (30) befestigt, und mit einem zweiten Ende (64) an der ersten Seite (26) des Sitzrahmens (24). Die Befestigung des zweiten Endes (64) des dritten Zugelements (60) an der ersten Seite (26) des Sitzrahmens (24) erfolgt bei diesem Ausführungsbeispiel mittels nicht dargestellter Schrauben.

Durch diese erfindungsgemässe und vorteilhafte Ausbildung wird erreicht, dass das aufgeblasene Airbagkissen (30) funktionssicher und stabil am Sitzrahmen (24) befestigt ist und in der vorgesehenen Position gehalten wird, so dass die Funktionssicherheit des Airbagkissens (30) gewährleistet ist.

Funktionsmäßig bewirkt das zweite Zugelement (50) die Steifigkeit des oberen Bereichs des aufgeblasenen Airbagkissens (30), so dass der Kopf eines Insassen aufgefangen bzw. gehalten wird, wenn das Airbagkissen (30) aufgrund eines äußeren Ereignisses aufgeblasen wird, und sich der Insasse aufgrund dieses äußeren Ereignisses in Richtung auf das aufgeblasene Airbagkissen (30) bewegt. Das erste Zugelement (40) und das dritte Zugelement (60) bewirken die Steifigkeit des mittleren und des unteren Bereichs des aufgeblasenen Airbagkissens (30), so dass der Körper eines Insassen aufgefangen bzw. gehalten wird, wenn das Airbagkissen (30) aufgrund eines äußeren Ereignisses ausgelöst wird, und sich der Insasse aufgrund dieses äußeren Ereignisses in Richtung auf das aufgeblasene Airbagkissen (30) bewegt. Die Form des aufgeblasenen Airbagkissens (30) mit dem vertieften Mittenbereich (32) bzw. Schulterbereich (38), sowie dem dickeren vorderen Bereich (36), bietet einen hervorragenden Schutz für den Kopf, den Brustkorb und den Unterleib des Insassen, während sie gleichzeitig ein abrutschen oder abgleiten des Insassen vom aufgeblasenen Airbagkissen (30) verhindert.

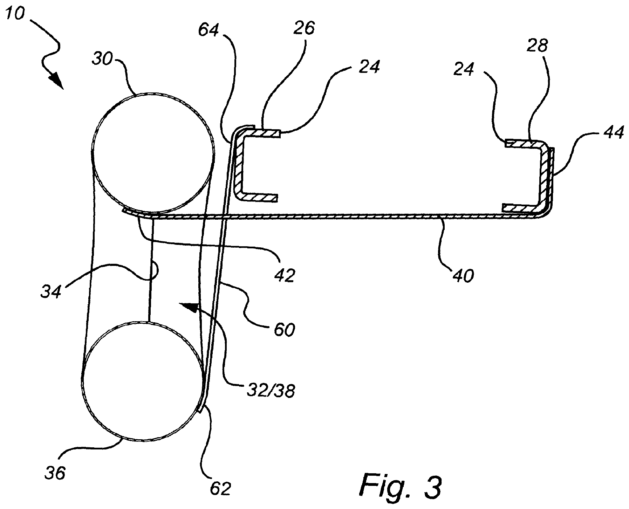

Die **Fig. 3** zeigt eine Schnittansicht einer ersten Ausführungsform der Airbagvorrichtung (10). Der Schnitt ist entlang der Linie A---A in **Fig.2**, wobei hier, wie durch die Pfeile (A) angedeutet, die Ansicht von oben dargestellt ist.

Die Airbagvorrichtung (10) weist ein Airbagkissen (30) auf, wobei das Airbagkissen (30) einen Mittenbereich (32) bzw. Schulterbereich (38) sowie einen dickeren vorderen Bereich (36) aufweist. Ein erstes Zugelement (40) ist mit einem ersten Ende (42) in einem hinteren Teil (34) des Mittenbereichs (32) bzw. Schulterbereichs (38) befestigt. Mit einem zweiten Ende (44) ist das erste Zugelement (40) an einer zweiten Seite (28) des Sitzrahmens (24) befestigt.

Weiterhin ist ein drittes Zugelement (60) mit einem ersten Ende (62) an einem vorderen Bereich (36) des Airbagkissens (30) befestigt, und mit einem zweiten Ende (64) an der ersten Seite (26) des Sitzrahmens (24).

Bei der hier dargestellten ersten Ausführungsform der Airbagvorrichtung (10) wird der Mittenbereich (32) bzw. der Schulterbereich (38) durch einen Bereich des Airbagkissens (30) gebildet, der nicht aufgeblasen wird. D.h., dass die beiden Seiten des Airbagkissens (30) in diesem Bereich direkt aufeinanderliegen und in ihrem Randbereich beispielsweise durch verschweißen miteinander verbunden sind, so dass kein Gas von den benachbarten aufgeblasenen Bereichen des Airbagkissens (30) in den Mittenbereich (32) bzw. Schulterbereich (38) gelangen kann. Hierdurch wird ein vertiefter Mittenbereich (32) bzw. Schulterbereich (38) gebildet, der relativ zu den ihn umgebenden Bereichen des Airbagkissens (30), und insbesondere zu dem dickeren vorderen Bereich (36), vertieft ist, wie in dieser Schnittdarstellung gut zu erkennen ist.

Dieser erfindungsgemäße und vorteilhafte vertiefte Mittenbereich (32) bzw. Schulterbereich (38) kann die Schulter eines Insassen aufnehmen, wenn dieser durch das die Aufblasung des Airbagkissens (30) bewirkende Ereignis in das aufgeblasene Airbagkissen (30) gedrückt wird. Damit wird jedoch der Insasse zuverlässig durch das aufgeblasene Airbagkissen (30) vor diesem festgehalten, und es wird verhindert, dass der Insasse vom aufgeblasenen Airbagkissen (30) abgleitet oder abrutscht.

Der erfindungsgemäße und vorteilhafte dicke vordere Bereich (36) des Airbagkissens (30) hält den Insassen zuverlässig mit der Schulter im vertieften Mittenbereich (32) bzw. Schulterbereich (38), so dass der Insasse nicht vom aufgeblasenen Airbagkissen (30) abrutscht oder abgleitet.

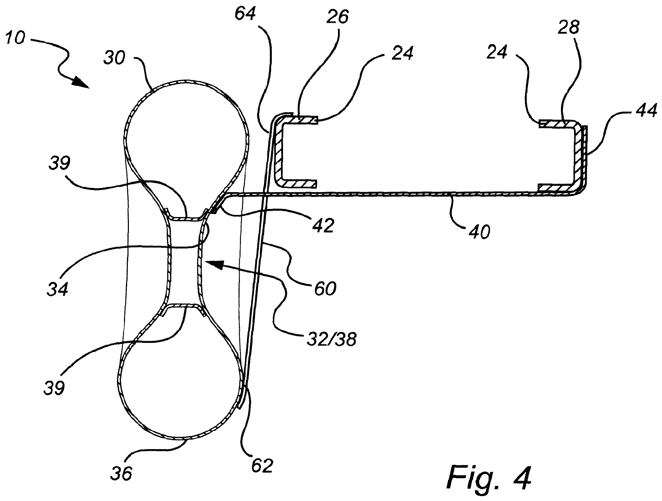

Die **Fig. 4** zeigt eine Schnittansicht einer zweiten Ausführungsform der Airbagvorrichtung (10). Der Schnitt ist entlang der Linie A---A in **Fig.2**, wobei hier, wie durch die Pfeile (A) angedeutet, die Ansicht von oben dargestellt ist.

Die Airbagvorrichtung (10) weist ein Airbagkissen (30) auf, wobei das Airbagkissen (30) einen Mittenbereich (32) bzw. Schulterbereich (38) sowie einen dickeren vorderen Bereich (36) aufweist. Ein erstes Zugelement (40) ist mit einem ersten Ende (42) in einem hinteren Teil (34) des Mittenbereichs (32) bzw. des Schulterbereichs (38) im Bereich von Haltemitteln (39) befestigt. Die Haltemittel (39) sind bei dem hier dargestellten Ausführungsbeispiel als Riemen ausgebildet, die im Inneren des Airbagkissens (30) angeordnet sind und die Seiten des Airbagkissens (30) miteinander verbinden, um beim aufblasen des Airbagkissens (30) die Seiten des Airbagkissens (30) mit einem vorgegebenen Abstand voneinander anzuordnen, und so die Form des aufgeblasenen Airbagkissens (30) sowie dessen Steifigkeit zu bestimmen. Mit einem zweiten Ende (44) ist das erste Zugelement (40) an einer zweiten Seite (28) des Sitzrahmens (24) befestigt.

Weiterhin ist ein drittes Zugelement (60) mit einem ersten Ende (62) an einem vorderen Bereich (36) des Airbagkissens (30) befestigt, und mit einem zweiten Ende (64) an der ersten Seite (26) des Sitzrahmens (24).

Bei der hier dargestellten zweiten Ausführungsform der Airbagvorrichtung (10) wird der Mittenbereich (32) bzw. der Schulterbereich (38) durch einen Bereich des Airbagkissens (30) gebildet, der beim aufblasen des Airbagkissen (30) ebenfalls aufgeblasen wird. Die Aufblasung dieses Mittenbereichs (32) bzw. Schulterbereichs (38) und damit dessen Ausdehnung nach außen wird jedoch durch die Haltemittel (39) begrenzt, so dass sich eine vorbestimmte Form des Mittenbereichs (32) bzw. Schulterbereichs (38) ergibt. Hierdurch wird ein vertiefter Mittenbereich (32) bzw. Schulterbereich (38) gebildet, der relativ zu den ihn umgebenden Bereichen des Airbagkissens (30), und insbesondere zu dem dickeren vorderen Bereich (36), vertieft ist, wie in dieser Schnittdarstellung gut zu erkennen ist.

Dieser erfindungsgemäße und vorteilhafte vertiefte Mittenbereich (32) bzw. Schulterbereich (38) kann die Schulter eines Insassen aufnehmen, wenn dieser durch das die Aufblasung des Airbagkissens (30) bewirkende Ereignis in das aufgeblasene Airbagkissen (30) gedrückt wird. Damit wird jedoch der Insasse zuverlässig durch das aufgeblasene Airbagkissen (30) vor diesem festgehalten, und es wird verhindert, dass der Insasse vom aufgeblasenen Airbagkissen (30) abgleitet oder abrutscht.

Der erfindungsgemäße und vorteilhafte dicke vordere Bereich (36) des Airbagkissens (30) hält den Insassen zuverlässig mit der Schulter im vertieften Mittenbereich (32) bzw. Schulterbereich (38), so dass der Insasse nicht vom aufgeblasenen Airbagkissen (30) abrutscht oder abgleitet.

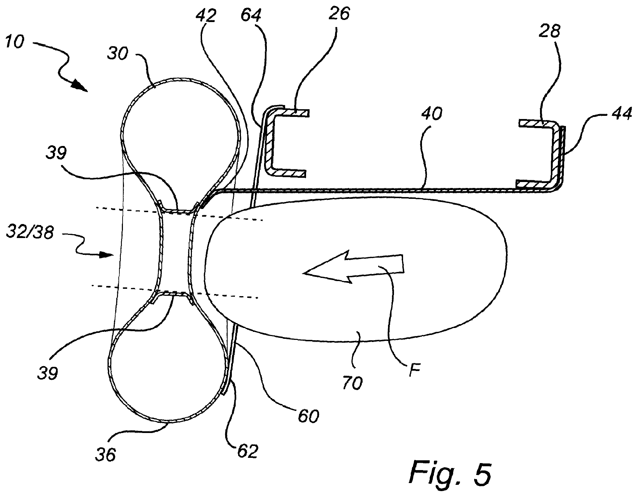

In **Fig. 5** ist die Wirkungsweise der erfindungsgemäßen Airbagvorrichtung (10) schematisch dargestellt.

Die **Fig. 5** zeigt die Schnittansicht der **Fig. 4**, wobei hier zusätzlich zur Erläuterung der Wirkungsweise der Airbagvorrichtung (10) ein Insasse (70) eingezeichnet ist. Weiterhin ist hier durch die gestrichelten Linien der vertiefte Mittenbereich (32) bzw. Schulterbereich (38) erläuternd dargestellt. Im Übrigen sind gleiche Teile hier mit dem gleichen Bezugszeichen versehen und brauchen daher nicht erneut erläutert werden.

Durch ein äußeres Ereignis, welches die Airbagvorrichtung (10) zur Auslösung bringt und so die Aufblasung des Airbagkissens (30) bewirkt, wird eine Kraft (F) auf den Insassen (70) aufgebracht. Durch diese Kraft (F) bewegt sich der Insasse (70) in Richtung auf das aufgeblasene Airbagkissen (30), wie durch den Pfeil bzw. die Kraftrichtung (F) angedeutet ist, und wird durch das aufgeblasene Airbagkissen (30) aufgefangen.

Die Schulter des Insassen (70) gelangt hierbei in den vertieften Mittenbereich (32) bzw. Schulterbereich (38) und wird hier aufgefangen und gehalten. Eine fortgesetzte Bewegung des Insassen (70) in die seitliche Richtung bzw. Kraftrichtung (F) wird durch das aufgeblasene Airbagkissen (30) bzw. den vertieften Schulterbereich (38) verhindert. Die hierbei vom Insassen (70) auf das Airbagkissen (30) aufgebrachte Kraft wird vom ersten Zugelement (40) aufgenommen und über dieses in die zweite Seite (28) des Sitzrahmens (24) eingeleitet.

Aber auch eine Bewegung des Insassen (70) nach vorne, d.h. ein abrutschen oder abgleiten des Insassen (70) vom aufgeblasenen Airbagkissen (30), wird durch die erfindungsgemäße Airbagvorrichtung (10) verhindert. Da der vordere Bereich (36) des Airbagkissens (30) dicker als der vertiefte Mittenbereich (32) bzw. Schulterbereich (38) ist, liegt die Schulter des Insasse (70) an dem vorderen dickeren Bereich (36) an und wird durch diesen an einer Bewegung nach vorne gehindert. Die hierbei vom Insassen (70) auf das Airbagkissen (30) aufgebrachte Kraft wird vom zweiten und dritten Zugelement (50, 60) aufgenommen und über diese in die erste Seite (26) des Sitzrahmens (24) eingeleitet.

### Bezugszeichenliste

- **10**: Airbagvorrichtung
- **20**: Sitz
- **22**: Rückenlehne
- **24**: Sitzrahmen
- **26**: erste Seite
- **28**: zweite Seite
- **30**: Airbagkissen
- **32**: Mittenbereich
- **34**: hinterer Teil
- **36**: vorderer Bereich
- **38**: Schulterbereich
- **39**: Haltemittel
- **40**: erstes Zugelement
- **42**: erstes Ende
- **44**: zweites Ende
- **50**: zweites Zugelement
- **52**: erstes Ende
- **54**: zweites Ende
- **60**: drittes Zugelement
- **62**: erstes Ende
- **64**: zweites Ende
- **70**: Insasse
- **A**: Ansicht A-A
- **F**: Kraftrichtung

## Patentansprüche

1. Airbagvorrichtung für ein Kraftfahrzeug, die an einem Sitzrahmen (24) angeordnet und befestigt werden kann, und die ausgebildet ist, den Kopf und den Brustkorb eines Insassen im Falle eines Seitenaufpralls oder Fahrzeugüberschlags zu schützen;
mit einem Gasgenerator;
mit einem Airbagkissen (30);
wobei der Gasgenerator und das Airbagkissen (30) miteinander verbunden sind, und wobei die Airbagvorrichtung (10) an einer ersten Seite (26) des Sitzrahmens (24) angeordnet und befestigt werden kann; wobei die Airbagvorrichtung (10) ein erstes Zugelement (40) aufweist, das mit einem ersten Ende (42) an einem Mittenbereich (32) des Airbagkissens (30) befestigt ist,
**dadurch gekennzeichnet, dass** die Airbagvorrichtung (10) ein zweites Zugelement (50) und ein drittes Zugelement (60) aufweist, die jeweils mit einem ersten Ende (52, 62) am vorderen Bereich (36) des Airbagkissens (30) befestigt sind.

2. Vorrichtung nach Anspruch 1, **dadurch gekennzeichnet, dass** das erste Zugelement (40) mit dem ersten Ende (42) in einem hinteren Teil (34) des Mittenbereichs (32) des Airbagkissens (30) befestigt ist.

3. Vorrichtung nach Anspruch 2, **dadurch gekennzeichnet, dass** das erste Zugelement (40) mit dem ersten Ende (42) im Bereich von Haltemitteln (39) in einem hinteren Teil (34) des Mittenbereichs (32) des Airbagkissens (30) befestigt ist.

4. Vorrichtung nach Anspruch 1, 2 oder 3, **dadurch gekennzeichnet, dass** das erste Zugelement (40) mit einem zweiten Ende (44) an einer zweiten, gegenüberliegenden Seite (28) des Sitzrahmens (24) angeordnet und befestigt werden kann.

5. Vorrichtung nach einem der vorangehenden Ansprüche, **dadurch gekennzeichnet, dass** das Airbagkissen (30) so ausgebildet ist, dass der Mittenbereich (32) des Airbagkissens (30) einen vertieften Mittenbereich (32) bildet, wenn die Airbagvorrichtung (10) ausgelöst und das Airbagkissen (30) aufgeblasen wird.

6. Vorrichtung nach einem der vorangehenden Ansprüche, **dadurch gekennzeichnet, dass** das Airbagkissen (30) so ausgebildet ist, dass ein vorderer Bereich (36) des Airbagkissens (30) dicker als der Mittenbereich (32) des Airbagkissens (30) ist, wenn die Airbagvorrichtung (10) ausgelöst und das Airbagkissen (30) aufgeblasen wird.

7. Vorrichtung nach einem der vorangehenden Ansprüche, **dadurch gekennzeichnet, dass** das zweite Zugelement (50) und das dritte Zugelement (60) jeweils mit einem zweiten Ende (54, 64) an der ersten Seite (26) des Sitzrahmens (24) angeordnet und befestigt werden können.

8. Vorrichtung nach einem der vorangehenden Ansprüche, **dadurch gekennzeichnet, dass** das zweite Zugelement (50) oberhalb des ersten Zugelementes (40) und das dritte Zugelement (60) unterhalb des ersten Zugelementes (40) angeordnet ist.

## Claims

1. Airbag device for a motor vehicle, which can be arranged on and fastened to a seat frame (24) and which is designed to protect the head and chest of an occupant in the event of a side impact or vehicle rollover;
comprising a gas generator;
comprising an airbag cushion (30);
the gas generator and the airbag cushion (30) being connected to one another, and it being possible for the airbag device (10) to be arranged on and fastened to a first side (26) of the seat frame (24);
the airbag device (10) having a first tension element (40) which is fastened by a first end (42) to a central region (32) of the airbag cushion (30),
**characterized in that** the airbag device (10) has a second tension element (50) and a third tension element (60) which are each fastened by a first end (52, 62) to the front region (36) of the airbag cushion (30).

2. Device according to claim 1, **characterized in that** the first tension element (40) is fastened by the first end (42) in a rear part (34) of the central region (32) of the airbag cushion (30).

3. Device according to claim 2, **characterized in that** the first tension element (40) is fastened by the first end (42) in the region of holding means (39) in a rear part (34) of the central region (32) of the airbag cushion (30).

4. Device according to claim 1, 2 or 3, **characterized in that** the first tension element (40) can be arranged on and fastened to a second, opposite side (28) of the seat frame (24) by a second end (44).

5. Device according to any of the preceding claims, **characterized in that** the airbag cushion (30) is designed such that the central region (32) of the airbag cushion (30) forms a recessed central region (32) when the airbag device (10) is triggered and the airbag cushion (30) is inflated.

6. Device according to any of the preceding claims, **characterized in that** the airbag cushion (30) is designed such that a front region (36) of the airbag cushion (30) is thicker than the central region (32) of the airbag cushion (30) when the airbag device (10) is triggered and the airbag cushion (30) is inflated.

7. Device according to any of the preceding claims, **characterized in that** the second tension element (50) and the third tension element (60) can each be arranged on and fastened to the first side (26) of the seat frame (24) by a second end (54, 64).

8. Device according to any of the preceding claims, **characterized in that** the second tension element (50) is arranged above the first tension element (40) and the third tension element (60) is arranged below the first tension element (40).

## Revendications

1. Dispositif de coussin de sécurité gonflable pour véhicule automobile, qui peut être disposé sur un cadre de siège (24) et fixé à celui-ci, et qui est conçu pour protéger la tête et la poitrine d'un passager en cas de choc latéral ou de tonneau effectué par un véhicule ;
comportant un générateur de gaz ;
comportant un coussin pour coussin de sécurité gonflable (30) ;
dans lequel le générateur de gaz et le coussin pour coussin de sécurité gonflable (30) sont reliés l'un à l'autre, et dans lequel le dispositif de coussin de sécurité gonflable (10) peut être disposé et fixé sur un premier côté (26) du cadre de siège (24) ; dans lequel le dispositif de coussin de sécurité gonflable (10) présente un premier élément de traction (40) qui est fixé avec une première extrémité (42) à une région centrale (32) du coussin pour coussin de sécurité gonflable (30),
**caractérisé en ce que** le dispositif de coussin de sécurité gonflable (10) présente un deuxième élément de traction (50) et un troisième élément de traction (60), lesquels sont respectivement fixés avec une première extrémité (52, 62) à la région avant (36) du coussin pour coussin de sécurité gonflable (30).

2. Dispositif selon la revendication 1, **caractérisé en ce que** le premier élément de traction (40) est fixé avec la première extrémité (42) dans une partie arrière (34) de la région centrale (32) du coussin pour coussin de sécurité gonflable (30).

3. Dispositif selon la revendication 2, **caractérisé en ce que** le premier élément de traction (40) est fixé avec la première extrémité (42) dans la région de moyens de maintien (39) dans une partie arrière (34) de la région centrale (32) du coussin pour coussin de sécurité gonflable (30).

4. Dispositif selon la revendication 1, 2 ou 3, **caractérisé en ce que** le premier élément de traction (40) peut être disposé avec une seconde extrémité (44) sur un second côté opposé (28) du cadre de siège (24) et fixé à celui-ci.

5. Dispositif selon l'une des revendications précédentes, **caractérisé en ce que** le coussin pour coussin de sécurité gonflable (30) est conçu de telle sorte que la région centrale (32) du coussin pour coussin de sécurité gonflable (30) forme une région centrale (32) évidée lorsque le dispositif de coussin de sécurité gonflable (10) est déclenché et que le coussin pour coussin de sécurité gonflable (30) est gonflé.

6. Dispositif selon l'une des revendications précédentes, **caractérisé en ce que** le coussin pour coussin de sécurité gonflable (30) est conçu de telle sorte qu'une région avant (36) du coussin pour coussin de sécurité gonflable (30) est plus épaisse que la région centrale (32) du coussin pour coussin de sécurité gonflable (30) lorsque le dispositif de coussin de sécurité gonflable (10) est déclenché et que le coussin pour coussin de sécurité gonflable (30) est gonflé.

7. Dispositif selon l'une des revendications précédentes, **caractérisé en ce que** le deuxième élément de traction (50) et le troisième élément de traction (60) peuvent être respectivement disposés avec une seconde extrémité (54, 64) sur le premier côté (26) du cadre de siège (24) et fixés à celui-ci.

8. Dispositif selon l'une des revendications précédentes, **caractérisé en ce que** le deuxième élément de traction (50) est disposé au-dessus du premier élément de traction (40) et le troisième élément de traction (60) est disposé en dessous du premier élément de traction (40).
